# EUROPÄISCHE PATENTSCHRIFT

(11) **EP 1 473 539 B1**
(45) Veröffentlichungstag und Bekanntmachung des Hinweises auf die Patenterteilung: **28.09.2016**
(21) Anmeldenummer: 04009704.0
(22) Anmeldetag: 23.04.2004
(51) Int. Cl.: G01M 17/02, G01B 11/16, G01B 11/24

(54) **Verfahren und Vorrichtung zur Messung der Form und/oder der Verfomung eines Objektes, insbesondere durch Interferenzmessung**
Method and apparatus for measuring the form and/or deformation of an object, in particular by interferometry
Procédé et appareil pour mesurer la forme et/ou la déformation d'un objet, en particulier à l'aide de l'interférométrie

(30) Priorität: 28.04.2003 DE 10319099
(43) Veröffentlichungstag der Anmeldung: 03.11.2004
(73) Patentinhaber: Carl Zeiss Optotechnik GmbH, 83115 Neubeuern (DE)
(72) Erfinder: Steinbichler, Hans, 83115 Neubeuern (DE); Berger, Roman, 83530 Schnaitsee (DE); Mayer, Thomas, 83059 Kolbermoor (DE)
(74) Vertreter: Zinnecker, Armin

(56) Entgegenhaltungen:
- EP-A- 1 154 227
- EP-A2- 1 061 332
- DE-A- 10 128 334
- DE-A- 19 636 354
- US-A1- 2002 041 282

## Beschreibung

Die Erfindung betrifft ein Verfahren zur Formmessung und/oder Verformungsmessung eines Objekts. Insbesondere betrifft die Erfindung ein Verfahren zur Interferenzmessung eines Objekts. Bei dem Objekt kann es sich insbesondere um einen Reifen oder um ein Bauteil aus einem Verbundwerkstoff handeln.

Bei dem Reifen kann es sich um einen PKW-Reifen, einen LKW-Reifen, einen Flugzeugreifen oder einen Reifen eines sonstigen Fortbewegungsmittels handeln. Insbesondere ist das Verfahren dazu geeignet, einen nicht-montierten Reifen zu untersuchen, also einen Reifen, der nicht auf einer Felge montiert ist.

Verbundwerkstoffe (composites) werden auf vielen technischen Gebieten verwendet. Es handelt sich um Werkstoffe, die aus zwei oder mehreren einzelnen Werkstoffen, die miteinander verbunden sind, bestehen. Insbesondere kann es sich um Gummi-Metall-Verbindungen, kohlefaserverstärkte Kunststoffe, geschäumte Kunststoffe, Honigwabenstrukturen und Strukturbauteile handeln. Verbundwerkstoffe finden ferner bei Halbzeugen Verwendung, beispielsweise Rohren, Stangen und Platten. Elektronik-Platinen werden üblicherweise durch Verbundwerkstoffe realisiert. Verbundwerkstoffe finden auch als Flugzeugteile Anwendung, insbesondere für den Flügel, die Flügelklappen, die Landeklappen, den Rumpf und als Spoiler, Heckflosse, Ruderschale, Seitenleitwerk, Kofferklappe sowie für das Interieur. Im Fahrzeugbau werden Verbundwerkstoffe beispielsweise verwendet für Energieabsorber, Motorhaube, Fahrzeugdach, Türen, Armaturenbrett, Sitzschale und Fahrzeugrahmen. Verbundwerkstoffe finden Anwendung für Behälter und Tanks für Gase und Flüssigkeiten. Sie werden auch verwendet für Sportgeräte, beispielsweise Ski, Snowboard und Fahrrad.

Bei dem Verfahren und der Vorrichtung wird das Objekt oder dessen Oberfläche mit Licht aus einer Strahlungsquelle bestrahlt. Bei dem Licht kann es sich um unstrukturiertes Licht handeln. Insbesondere kann bei der Fotogrammmetrie unstrukturiertes Licht verwendet werden. In diesem Fall kann eine Formmessung und/oder Verformungsmessung mit zwei oder mehr Kameras, die das Objekt oder dessen Oberfläche unter einem bestimmten Winkel aufnehmen, durchgeführt werden. Es ist allerdings auch möglich, strukturiertes Licht zu verwenden. Strukturiertes Licht wird beispielsweise bei Moire-Verfahren oder Graycode-Verfahren oder Triangulationsverfahren verwendet. Bei der Anwendung von strukturiertem Licht kann das Objekt oder dessen Oberfläche mit einer Kamera beobachtet werden. Es ist allerdings auch möglich, das Objekt oder dessen Oberfläche mit kohärentem oder teilkohärentem Licht, insbesondere Laserlicht, zu bestrahlen. Insbesondere interferometrische Verfahren können mit einem derartigen Licht durchgeführt werden.

Das von dem Objekt reflektierte Licht, bei dem es sich um ein Streulicht handeln kann, wird von einer Kamera aufgenommen. Die Kamera umfasst einen bildgebenden Sensor, insbesondere einen flächenhaften Sensor. Besonders geeignet ist ein CCD-Sensor.

Bei dem Verfahren handelt es sich insbesondere um ein Verfahren, mit dem die Geometrie oder Verformungen von Objekten mit Hilfe von Speckle-Bildern oder interferometrischen Bildern erfasst werden können, insbesondere Shearografie-Verfahren, Holografie-Verfahren, ESPI-Verfahren oder Weißlichtinterferometer-Verfahren. Diese Verfahren können mit CCD-Sensoren oder anderen bildgebenden Sensoren durchgeführt werden, und zwar mit oder ohne Phasenbildauswertung durch einen zeitlichen oder räumlichen Phasenshift. Zur Beleuchtung des Objekts können eine oder mehrere Strahlungsquellen verwendet werden, insbesondere Laserlichtquellen, aber auch Beleuchtungseinrichtungen wie sie in der Weißlichtinterferometrie eingesetzt werden wie beispielsweise thermische Quellen oder LED.

Bei der Durchführung des Verfahrens können jeweils eine oder mehrere Aufnahmen, aus denen dann ein Mittelwert gebildet werden kann, für einen oder mehrere unterschiedliche Verformungszustände des Objekts gemacht werden. Die verschiedenen Verformungszustände des Objekts können insbesondere dadurch erzeugt werden, dass das Objekt jeweils einem verschiedenen Umgebungsdruck ausgesetzt wird.

Dies ist insbesondere bei Reifen, die nicht auf einer Felge montiert sind, möglich und günstig. Der Reifen kann in eine Unterdruckkammer oder eine Überdruckkammer eingebracht werden. Einer der Verformungszustände wird dann bei einem vorhandenen oder abweichenden Unterdruck oder Überdruck durchgeführt, bei dem in Fehlstellen des Reifens eingeschlossene Luft sich ausdehnt oder zusammengedrückt wird und lokale Verformungen des Reifens erzeugt, die dann gemessen und festgestellt werden können.

Dasselbe Verfahren kann auch mit anderen Objekten durchgeführt werden. Ferner ist es möglich, eine Unterdruckkammer oder Überdruckkammer vorzusehen, die durch eine Platte aus einem lichtdurchlässigen Werkstoff gebildet wird, die gegenüber dem Objekt durch eine umlaufende Dichtung abgedichtet ist. In den abgedichteten Bereich zwischen dem Objekt und der Platte kann ein Unterdruck oder ein Überdruck eingebracht werden, so dass Lufteinschlüsse ausgedehnt oder zusammengedrückt werden, wodurch entsprechende Verformungen an diesen Fehlstellen des Verbundwerkstoffes entstehen, die durch die Platte hindurch beobachtet werden können.

Die verschiedenen Verformungszustände des Objekts können allerdings auch dadurch erzeugt werden, dass das Objekt auf verschiedene Temperaturen gebracht wird, beispielsweise durch eine Wärmezufuhr, die insbesondere durch Strahlung erfolgen kann. Dies ist insbesondere bei Bauteilen aus einem Verbundwerkstoff vorteilhaft.

Aus unterschiedlichen Zustandsbildern, die jeweils verschiedene Verformungszustände repräsentieren, kann eine Differenzverformung und/oder ihr Gradient berechnet werden. Die Lichtquelle oder Lichtquellen können gemeinsam mit der Kamera als eine Einheit, die einen Messkopf bildet, aufgebaut sein.

Aus der DE 199 44 314 A1 ist ein Prüfgerät für Reifen bekannt, das eine Postitioniervorrichtung für den zu prüfenden Reifen und eine Prüfvorrichtung, insbesondere eine Laser-Prüfvorrichtung, umfasst. Die Prüfvorrichtung kann mehrere Messköpfe, insbesondere Laser-Messköpfe umfassen.

Aus der DE 101 28 334 ist ein Verfahren zur Beleuchtung von Objekten für die interferometrische Speckle-Shearografie bekannt, bei dem eine oder mehrere für sich jeweils kohärente, aufgeweitete oder flächenhafte Strahlquellen gleichzeitig von mehreren Beleuchtungsrichtungen mit unterschiedlichen Sensitivitätsvektoren die Objektoberfläche beleuchten. Die beleuchteten Teilbereiche des zu überprüfenden Objektausschnittes können sich wahlweise vollständig überschneiden oder mehr oder weniger überlappen, so dass eine gleichmäßige Ausleuchtung erreicht werden kann. Die Einfallswinkel der Strahlen von der Beleuchtungsquelle an die jeweiligen Punkte der Objektoberfläche des Prüfbereichs können so gerichtet sein, dass die jeweiligen korrespondierenden idealen Ausfallswinkel bezüglich der örtlichen Ober-flächennormale nicht direkt in die Bildebene des Sensors gerichtet sind, so dass direkte Strahlungen vermieden werden.

Die EP 1 061 332 A2 offenbart ein elektronisches Shearographie-Verfahren, das bei der Reifenprüfung verwendet wird. Um eine verbesserte Präsentation der Shearographie-Bilder zu erreichen, werden verschiedene Bilder bei einer vorbestimmten Bildfrequenz gespeichert, die dann als sequenzielle Serie abgespielt werden können. Dabei ist es möglich, gleichzeitig mehrere Bildsequenzen, die verschiedene Bereiche des Testobjekts zeigen, abzuspielen.

Aus der US 4 707 594 ist ein Verfahren zum Prüfen eines Reifens bekannt, bei dem der nicht auf einer Felge montierte Reifen in eine Unterdruckkammer eingebracht wird. Die Prüfung des Reifens erfolgt durch ein Holographie-Verfahren oder ein Shearographie-Verfahren. Der Reifen wird einer plötzlichen Druckänderung ausgesetzt, wodurch seine Oberfläche für eine verhältnismäßig lange Zeit fortschreitend kriecht. Während dieser Zeit wird eine Serie aufeinanderfolgender Bilder erzeugt.

Die DE 28 06 845 C2 offenbart ein Verfahren zur interferometrischen Untersuchung eines Gegenstandes, bei dem auf einem photographischen Aufzeichnungsträger eine erste und eine zweite Abbildung des untersuchten, mit kohärentem Licht beleuchteten und sich in zwei verschiedenen Zuständen befindenden Gegenstands mittels eines Abbildungssystems erzeugt wird.

Bei der Durchführung des Eingangs erläuterten Verfahrens kann es vorkommen, dass die Dynamik des Sensors, insbesondere bei nicht kooperativen Objekten mit dunklen und/oder stark reflektierenden Oberflächen nicht groß genug ist, um sowohl in dunklen als auch in hellen Bildbereichen sinnvoll messen zu können. Dieses Problem kann insbesondere bei Reifen, insbesondere bei stark glänzenden Reifen, oder bei Verbundwerkstoffen auftreten.

Aus der DE 196 36 354 A ist ein Verfahren zur Formmessung eines Objekts bekannt, bei dem das Objekt mit einem von Lichtquellen erzeugten Linienmuster bestrahlt und das reflektierte Licht mit einer CCD-Kamera aufgenommen wird. Dabei kann eine erste Aufnahme mit einer ersten Einstellung der Kamera und/oder der Strahlungsquelle und dann eine zweite Aufnahme mit einer zweiten Einstellung der Kamera und/oder der Strahlungsquelle durchgeführt werden. Die Einzelbilder können zu einem Gesamtbild kombiniert werden.

Aus der EP 1 154 227 A1 ist ein Verfahren zum Bestimmen der Ränder eines elektrischen Bauteils bekannt, bei dem das elektrische Bauteil aus vier verschiedenen Richtungen aufgenommen wird, so dass der Schatten, der von dem elektrischen Bauteil erzeugt wird, nacheinander auf vier verschiedenen Seiten liegt. Auf diese Weise können alle vier Ränder des elektrischen Bauteils bestimmt werden, und es kann festgestellt werden, ob der Umriss des elektrischen Bauteils gegenüber der Soll-Lage verschoben und/oder verkippt ist.

Die US 2002/041282 A1 offenbart ein Verfahren zum Bestimmen der dreidimensionalen Koordinaten eines Objekts, das von einer Lichtquelle mit einem Linienmuster bestrahlt wird. Das reflektierte Licht wird von einer CCD-Kamera aufgenommen. Anschließend wird ein weiteres Bild aus einer zweiten Perspektive aufgenommen. Aus den beiden Bildern werden die dreidimensionalen Koordinaten des Objekts berechnet.

Aufgabe der Erfindung ist es, bei einem Verfahren der eingangs angegebenen Art die Bildqualität zu verbessern.

Erfindungsgemäß wird diese Aufgabe bei einem Verfahren der eingangs angegebenen Art durch die Merkmale des Anspruchs 1 gelöst. Es wird eine erste Aufnahme mit einer ersten Einstellung, die an einen ersten Bildbereich angepasst ist, gemacht, und eine zweite Aufnahme mit einer zweiten Einstellung, die an einen zweiten Bildbereich angepasst ist. Beide Aufnahmen werden kombiniert. Die Einstellungen können sich auf die Kamera, insbesondere den bild gebenden Sensor und/oder die Aufnahmeoptik, beziehen, insbesondere auf die Verstärkung, die Blende und/oder die Verschlusszeit und/oder einen oder mehrere weitere Parameter der Kamera. Stattdessen oder zusätzlich können sich die Einstellungen auf die Strahlungsquelle beziehen, insbesondere auf die Anzahl der Strahlungsquellen, die Lichtintensität der einen oder mehreren Strahlungsquellen und/oder die Richtung des Lichts aus einer oder mehreren Strahlungsquellen und/oder eine oder mehrere weitere Parameter der Strahlungsquelle.

Erfindungsgemäß ist vorgesehen, dass das Verfahren bei einem ersten Zustand des Objekts durchgeführt wird und anschließend bei einem zweiten Zustand des Objekts, der gegenüber dem ersten Zustand verformt ist, durchgeführt wird. Falls erforderlich kann das Verfahren auch noch bei einem oder mehreren weiteren verformten Zuständen des Objekts durchgeführt werden.

Erfindungsgemäß wird die Differenz der bei verschiedenen Zuständen des Objekts gemachten Aufnahmen gebildet. Diese Differenz kann errechnet werden. Sie kann vor oder nach der Kombination der ersten und zweiten Aufnahmen gebildet werden.

Die Einstellungen sind vorzugsweise für den jeweiligen Bildbereich optimiert. Beispielsweise kann für einen dunklen Bildbereich ein hoher Verstärkungswert eingestellt werden, um ein optimales Eingangssignal für den Sensor zu erhalten. In entsprechender Weise kann für einen stark reflektierenden und damit sehr hellen Bildbereich ein niedriger Verstärkungswert gewählt werden, möglicherweise mit einer zusätzlich verkürzten Belichtungszeit.

Um die Dynamik des bildgebenden Sensors zu erweitern, werden zwei oder mehrere Aufnahmen kombiniert. Dadurch können auch überstrahlte oder unterbelichtete Bereiche auf dem Objekt erfasst werden. Zur Erzeugung der einzelnen Aufnahmen mit unterschiedlicher Intensität auf dem Sensor gibt es verschiedene Möglichkeiten. Die unterschiedliche, an den jeweiligen Bildbereich angepasste Intensität auf dem Sensor kann durch eine Veränderung der Parameter der Kamera, insbesondere des Sensors und/oder der Aufnahmeoptik, und/oder durch eine Veränderung der Parameter der Strahlungsquelle erreicht werden.

Falls erforderlich können neben der ersten und der zweiten Aufnahme auch noch eine dritte und/oder weitere Aufnahmen mit jeweils weiteren Einstellungen, die an den jeweiligen Bildbereich angepasst sind, gemacht werden.

Die beiden Aufnahmen und gegebenenfalls eine oder mehrere weitere Aufnahmen können in der Weise kombiniert bzw. zusammengesetzt werden, dass sie den gesamten Bildbereich ausfüllen. Wenn zwei Aufnahmen ausreichen, kann die erste Aufnahme einen Teilbereich des gesamten Bildbereichs abdecken und die zweite Aufnahme den restlichen Teilbereich des gesamten Bildbereichs abdecken.

Vorteilhafte Weiterbildungen sind in den Unteransprüchen beschrieben.

Die Kombination der Aufnahmen kann durch eine Mittelung der Informationen je Bildpunkt erfolgen, wobei die Mittelung vorzugsweise anhand eines Gütekriteriums durchgeführt wird. Als Gütekriterium kann das Kontrastbild, das errechnet werden kann, verwendet werden.

Stattdessen oder zusätzlich kann die Kombination der Aufnahmen durch eine Auswahl der Information mit der höheren Güte erfolgen. Die Beurteilung der Güte kann durch ein Gütekriterium erfolgen, wobei als Gütekriterium das Kontrastbild, das errechnet werden kann, verwendet werden kann.

Eine weitere vorteilhafte Weiterbildung ist dadurch gekennzeichnet, dass mit der ersten Einstellung und der zweiten Einstellung und möglicherweise einer oder mehreren weiteren Einstellungen jeweils mehrere Aufnahmen gemacht werden. Diese Aufnahmen können abwechselnd und/oder hintereinander gemacht werden. Insbesondere ist es möglich, mit der ersten Einstellung eine erste Aufnahme zu machen, mit der zweiten Einstellung eine erste Aufnahme zu machen, möglicherweise mit einer oder mehreren weiteren Einstellungen eine oder mehrere erste Aufnahmen zu machen, dann wieder mit der ersten Einstellung eine zweite Aufnahme zu machen, mit der zweiten Einstellung eine zweite Aufnahme zu machen und möglicherweise mit der einen oder den mehreren weiteren Einstellungen eine oder mehrere zweite Aufnahmen zu machen. Es ist möglich, mit der ersten Einstellung und der zweiten Einstellung und möglicherweise einer oder mehreren weiteren Einstellungen in analoger Weise eine oder mehrere weitere Aufnahmen zu machen.

Es ist allerdings auch möglich, mit der ersten Einstellung eine erste und eine zweite und möglicherweise noch eine oder mehrere weitere Aufnahmen zu machen und dann mit der zweiten Einstellung eine erste und eine zweite und möglicherweise noch eine oder mehrere weitere Aufnahmen zu machen. Es ist möglich, mit einer oder mehreren weiteren Einstellungen in analoger Weise weitere Aufnahmen zu machen.

Aus einigen oder allen der mit der ersten und/oder zweiten und/oder weiteren Einstellungen gemachten Aufnahmen kann ein Mittelwert gebildet werden.

Vorteilhaft ist es, wenn die Bestrahlungsrichtung von der Aufnahmerichtung verschieden ist.

Eine oder mehrere Einstellungen der Kamera und/oder der Strahlungsquelle können manuell ermittelt werden.

In vielen Fällen ist es allerdings vorteilhaft, wenn eine oder mehrere Einstellungen der Kamera und/oder der Strahlungsquelle durch einen Optimierungsalgorithmus ermittelt werden. Die Einstellungen können dann automatisch ermittelt werden.

Eine weitere vorteilhafte Weiterbildung ist dadurch gekennzeichnet, dass eine oder mehrere Einstellungen der Kamera und/oder der Strahlungsquelle durch iteratives Verändern ermittelt werden. Dieses Verfahren kann manuell oder automatisch durchgeführt werden. Dabei ist es möglich, für die Qualität der Aufnahmen in den verschiedenen Bildbereichen Zielvorgaben zu definieren. Bei iterativ veränderten Einstellungen werden unterschiedliche Aufnahmen erzeugt und hinsichtlich der definierten Zielvorgaben beurteilt, bis ein Optimum erreicht ist. Dieses Verfahren kann in der Weise durchgeführt werden, dass zu einer Aufnahme ein Bewertungswert ermittelt und mit der Zielvorgabe verglichen wird und dass anschließend eine oder mehrere Einstellungen iterativ derart verändert werden, bis eine weitgehende

Übereinstimmung des Bewertungswerts mit der Zielvorgabe erreicht ist. Das Verfahren kann mit mehreren Bewertungswerten und mehreren Zielvorgaben durchgeführt werden. Bei der Durchführung des Verfahrens ist es möglich, verschiedene Einstellungen der Kamera und/oder der Strahlungsquelle gleichzeitig zu verändern. In vielen Fällen ist es allerdings vorteilhaft, zunächst eine Einstellung der Kamera und/oder der Strahlungsquelle zu verändern und anschließend eine oder mehrere weitere Einstellungen zu verändern. Auf diese Weise werden die Einstellungen der Kamera und/oder der Strahlungsquelle nacheinander optimiert.

Nach einer weiteren vorteilhaften Weiterbildung können systematisch alle möglichen Werte von einer oder mehreren oder allen Einstellungen der Kamera und/oder der Strahlungsquelle durchlaufen werden, um auf diese Weise den oder die optimalen Einstellungswerte zu erhalten. In vielen Fällen ist es allerdings sinnvoller, anhand dem oder den für jeweils eine einzelne Aufnahme ermittelten Bewertungswerten und dem Vergleich mit der oder den Zielvorgaben den oder die jeweils nächsten Einstellungswerte zu bestimmen, um auf diese Weise möglichst schnell die optimale Einstellung bzw. die optimalen Einstellungen zu erhalten. Hierfür können Optimierungsalgorithmen angewendet werden.

Nach einer weiteren vorteilhaften Weiterbildung wird das Objekt aus unterschiedlichen Richtungen beleuchtet.

Vorteilhaft ist es, das Objekt mit unterschiedlicher Lichtintensität zu beleuchten.

Nach einer weiteren vorteilhaften Weiterbildung wird das Objekt mit einer unterschiedlichen Anzahl von Lichtquellen beleuchtet.

Ausführungsbeispiele der Erfindung werden nachstehend anhand der beigefügten Zeichnung im Einzelnen erläutert. In der Zeichnung zeigt
- Fig. 1: einen Reifen und einen Messkopf in einer Seitenansicht,
- Fig. 2: einen Reifen und einen abgewandelten Messkopf, bei dem die Bestrahlungsrichtung von der Aufnahmerichtung verschieden ist,
- Fig. 3: eine abgewandelte Ausführungsform mit zwei Messköpfen der in Fig. 1 gezeigten Art,
- Fig. 4: eine abgewandelte Ausführungsform mit zwei Messköpfen der in Fig. 2 gezeigten Art,
- Fig. 5: eine erste Aufnahme mit einer ersten Einstellung, insbesondere Kameraeinstellung, die an einen ersten Bildbereich angepasst ist,
- Fig. 6: eine zweite Aufnahme mit einer zweiten Einstellung, insbesondere Kameraeinstellung, die an einen zweiten, restlichen Bildbereich angepasst ist,
- Fig. 7: eine Aufnahme (Gesamtaufnahme), die aus der ersten Aufnahme und der zweiten Aufnahme (den Teilaufnahmen) kombiniert bzw. zusammengesetzt ist,
- Fig. 8: einen aufzunehmenden Bereich eines Bauteils aus einem Verbundwerkstoff mit einer Beleuchtung aus unterschiedlichen Richtungen,
- Fig. 9: einen aufzunehmenden Bereich eines Bauteils aus einem Verbundwerkstoff mit einer Beleuchtung mit unterschiedlicher Lichtleistung,
- Fig. 10: einen aufzunehmenden Bereich eines Bauteils aus einem Verbundwerkstoff mit einer Beleuchtung aus einer unterschiedlichen Anzahl von Lichtquellen und
- Fig. 11: ein Ablaufdiagramm für die automatische Ermittlung der Parameter der Einstellungen der Kamera und/oder der Strahlungsquelle durch eine Optimierungsalgorithmus.

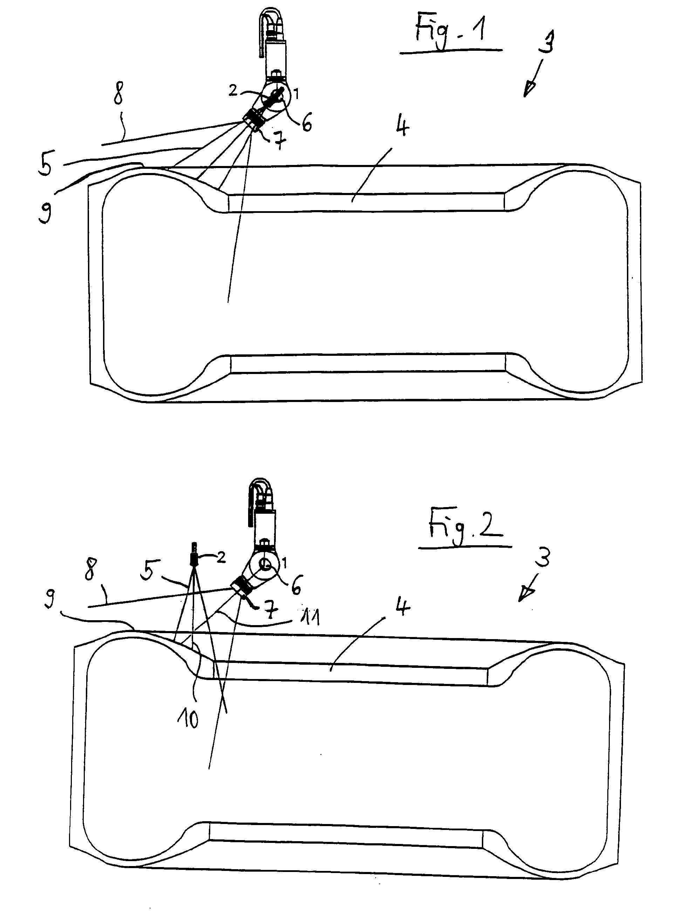

Die Figur 1 zeigt einen Teil eines Reifenprüfgeräts (in der Zeichnung nicht dargestellt), in dem ein Reifen 3 im unmontierten Zustand (also ohne Felge) auf einer (in der Zeichnung nicht dargestellten) waagrechten Auflage aufliegt. Über dem Reifen 3 ist ein Messkopf 1 angeordnet, und zwar in dem Bereich, der über der Öffnung 4 des Reifens 3 liegt. Der Messkopf 1 umfasst eine Laserlicht-Strahlungsquelle 2 mit einem Strahlungskegel 5 und eine Kamera, die einen CCD-Sensor 6 und eine Aufnahmeoptik 7 mit einem Aufnahmekegel 8 umfasst. Durch die Laserlicht-Strahlungsquelle 2 wird ein Teil der Seitenfläche 9 des Reifens 3 mit Laserlicht bestrahlt. Das von der Seitenfläche 9 des Reifens 3 reflektierte Licht wird von dem CCD-Sensor 6 aufgenommen.

Der Reifen kann in dem Reifenprüfgerät um seine Mittenachse gedreht werden, wodurch eine Untersuchung über den gesamten Umfangsbereich des Reifens 3 ermöglicht werden kann.

Bei der Ausführungsform gemäß Fig. 2 ist die Laserlichtquelle 2 im Abstand von der Kamera, die den CCD-Sensor 6 und die Aufnahmeoptik 7 umfasst, angeordnet. Hierdurch ist die Bestrahlungsrichtung 10 in der Mitte des Strahlungskegels 5 von der Aufnahmerichtung 11 in der Mitte des Aufnahmekegels 8 verschieden.

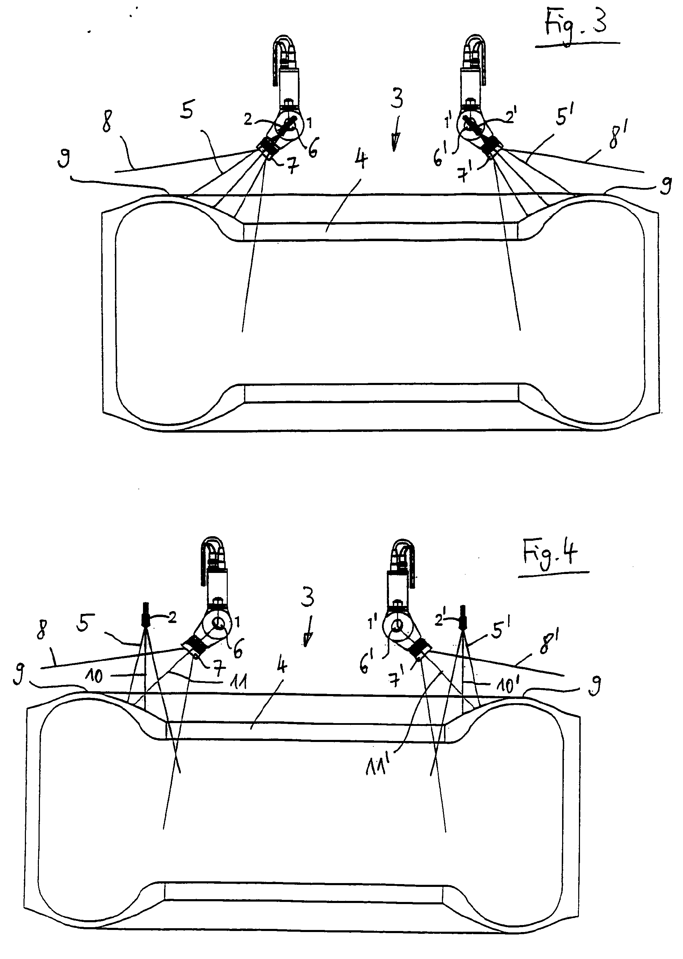

Bei der Ausführungsform nach Fig. 3 sind zwei Messköpfe 1,1' vorhanden, die ansonsten der Ausführungsform nach Fig. 1 entsprechen. Die Messköpfe 1 und 1' liegen einander gegenüber, beobachten also Bereiche der Seitenfläche 9 des Reifens 3, die um 180° versetzt sind, so dass der Reifen 3 zum Überstreichen der gesamten Seitenfläche 9 nur um 180° um seine vertikale Mittenachse gedreht werden muss.

Bei der Ausführungsform nach Fig. 4 sind zwei Messköpfe 1,1' der in Fig. 2 gezeigten Art vorhanden, die einander, wie bei der Ausführungsform nach Fig. 3, um 180° versetzt gegenüberliegen.

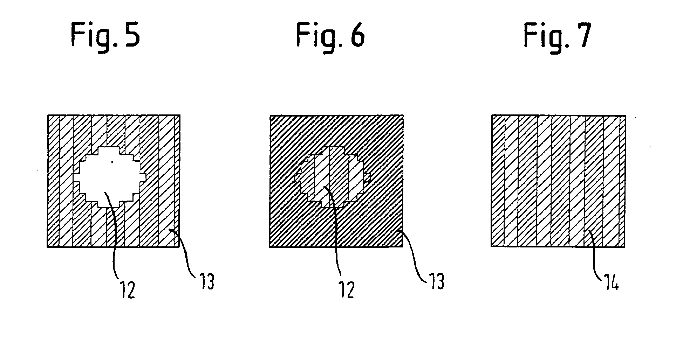

Bei der Durchführung des Verfahrens zur Interferenzmessung der Seitenfläche 9 des Reifens 3 wird die Seitenfläche 9 mit Laserlicht aus der Laserlicht-Strahlungsquelle 2 bzw. 2' bestrahlt. Das von der Seitenfläche 9 des Reifens 3 reflektierte Licht wird von dem CCD-Sensor 6 bzw. 6' aufgenommen. Zunächst wird eine erste Aufnahme, die in Fig. 5 gezeigt ist, mit einer ersten Kameraeinstellung gemacht. Hierbei handelt es sich um eine Aufnahme mit einer hohen Verstärkung. Der mittlere Bildbereich 12 ist überstrahlt und liefert keine sinnvolle Messinformation. Die Verstärkung des CCD-Sensors ist an den äußeren Bildbereich 13 angepasst, für den eine sinnvolle Messinformation geliefert wird.

Anschließend wird eine zweite Aufnahme hergestellt, die in Fig. 6 gezeigt ist. Diese Aufnahme wird mit einer geringen Verstärkung des CCD-Sensors 6 gemacht. Diese Verstärkung ist an den mittleren Bildbereich 12 angepasst. Sie liefert für den angepassten Bildbereich 12 eine sinnvolle Messinformation. Der äußere Bildbereich 13 er-scheint zu dunkel und liefert keine sinnvolle Messinformation.

Anschließend werden die erste Aufnahme gemäß Fig. 5 und die zweite Aufnahme gemäß Fig. 6 miteinander kombiniert. Hierdurch entsteht die in Fig. 7 gezeigte Aufnahme des gesamten Bildbereichs (Gesamtaufnahme), die im gesamten Bildbereich 14 eine sinnvolle Messinformation beinhaltet.

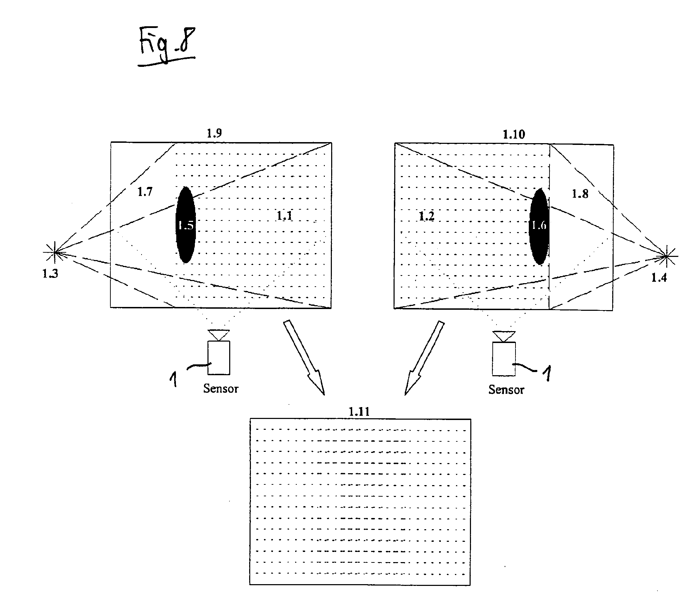

Fig. 8 zeigt einen aufzunehmenden Bereich eines Bauteils eines Flugzeugs aus einem Verbundwerkstoff, der als Rechteck dargestellt ist. Der Bereich wird zunächst von der Strahlungsquelle 1.3, die links oberhalb des Bereiches angeordnet ist, beleuchtet. Dabei wird das erste Bild 1.9 aufgenommen, das einen überstrahlten Bereich 1.5 und einen unterbelichteten Bereich 1.7 aufweist. Im Bereich 1.1 werden aussagekräftige Messwerte erzielt.

Anschließend wird der aufzunehmende Bereich des Bauteils von der weiteren Strahlungsquelle 1.4, die rechts oberhalb des Bereiches angeordnet ist, beleuchtet. Dabei wird das zweite Bild 1.10 aufgenommen, das einen überstrahlten Bereich 1.6 und einen unterbelichteten Bereich 1.8 aufweist. Im Bereich 1.2 werden aussagekräftige Messwerte erzielt.

Die erste Aufnahme 1.9 und die zweite Aufnahme 1.10 werden zur Gesamtaufnahme 1.11 zusammengesetzt. Die Gesamtaufnahme 1.11 weist überall aussagekräftige Messwerte auf. In der Aufnahme 1.9 liegen die nicht aussagekräftigen Bereiche 1.5 und 1.7 links von der vertikalen Mittellinie. In der Aufnahme 1.10 liegen die Bereiche 1.6 und 1.8 mit nicht aussagekräftigen Messwerten rechts von der Mittellinie. Durch die Beleuchtung des aufzunehmenden Bereichs aus unterschiedlichen Richtungen kann erreicht werden, dass die zusammengesetzte Aufnahme ausschließlich gültige Messwerte umfasst. Wie dargestellt wird das Objekt aus unterschiedlichen Richtungen beleuchtet. Die Variation der Beleuchtungsrichtung kann durch mehrere Strahlungsquellen an unterschiedlichen Orten erreicht werden, im vorliegenden Beispiel durch die Strahlungsquellen 1.3 und 1.4, die sich links und rechts des Objekts befinden. Es ist allerdings auch möglich, eine Strahlungsquelle, die an verschiedene Orte gebracht bzw. verschoben wird, zu verwenden. Es werden mehrere Bilder 1.9, 1.10 aufgenommen, die zu einem Ergebnisbild 1.11 verrechnet werden, das hinsichtlich überstrahlter bzw. unterbelichteter Bereiche optimiert ist.

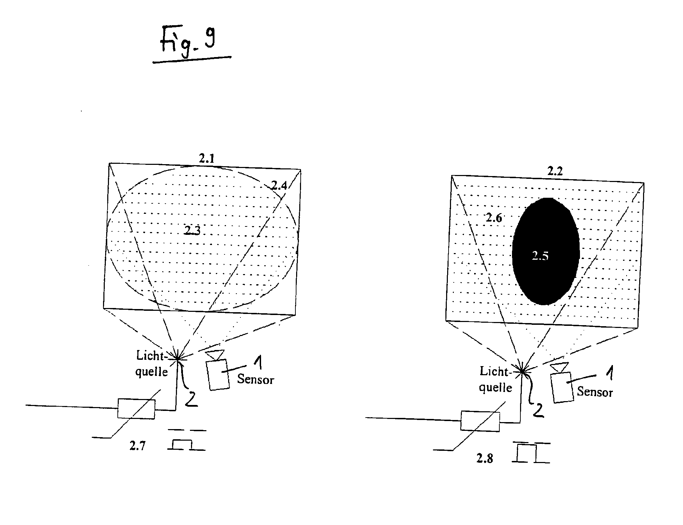

In Fig. 9 ist der aufzunehmende Bereich eines Bauteils wiederum als Rechteck dargestellt. In diesem Fall wird dieser Bereich mit unterschiedlicher Lichtintensität beleuchtet. Die Lichtintensität der Strahlungsquelle 2 wird zunächst auf einen geringen Wert eingestellt. Hierdurch entsteht auf dem Sensor 1 das Bild 2.1, das im mittleren Bereich 2.3 aussagekräftige Messwerte liefert und das in den Randbereichen 2.4 unterbelichtet ist. Für das zweite Bild 2.2 wird das Stellglied vom niedrigeren Wert 2.7 auf den höheren Wert 2.8 gesetzt, so dass die Strahlungsquelle 2 eine höhere Lichtintensität hat, mit der das zweite Bild 2.2 aufgenommen wird. Dieses Bild ist im mittleren Bereich 2.5 überstrahlt und liefert im äußeren Bereich 2.6 aussagekräftige Messwerte. Durch eine Kombination der beiden Bilder 2.1 und 2.2 erhält man im gesamten Bildbereich aussagekräftige Werte. Die Lichtintensität kann auch durch ein Filter verändert werden.

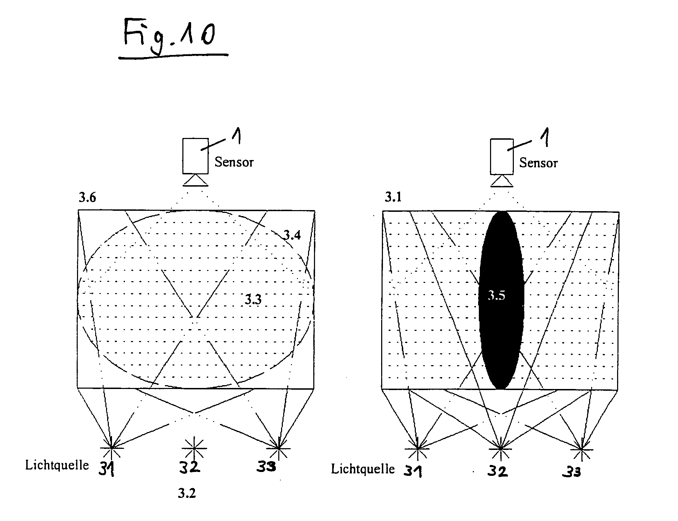

In Fig. 10 ist eine Ausführungsform dargestellt, bei der das Objekt mit einer unterschiedlichen Anzahl von Lichtquellen beleuchtet wird. Der gesamte zu untersuchende Bereich des Reifens ist wiederum als Rechteck dargestellt. Die Vorrichtung umfasst drei Lichtquellen 31, 32, 33, die im Abstand zu einer Längsseite des Bereiches parallel zu dieser Längsseite und oberhalb des Bereiches angeordnet sind. Der Sensor 1 befindet sich auf der gegenüberliegenden Seite des aufzunehmenden Bereichs. Zur Erzeugung des ersten Bildes 3.6 werden nur die beiden äußeren Lichtquellen 31 und 33 eingeschaltet. Hierdurch werden im Zentralbereich 3.3 aussagekräftige Messwerte erhalten, während die Randbereiche 3.4 unterbelichtet sind. Zur Erzeugung der zweiten Aufnahme 3.1 werden alle drei Lichtquellen 31, 32, 33 eingeschaltet. Jetzt ist der mittlere Bereich 3.5 überstrahlt. Im Übrigen werden aussagekräftige Messwerte erhalten. Die Zusammensetzung der Bilder 3.6 und 3.1 ergibt ein Bild, das im gesamten Bereich aussagekräftige Werte enthält. Die Lichtquellen 31, 32, 33 können sich zusätzlich auch noch in weiteren Parametern unterscheiden, beispielsweise der Leistung und/oder der Divergenz, um das Ergebnis noch weiter zu verbessern.

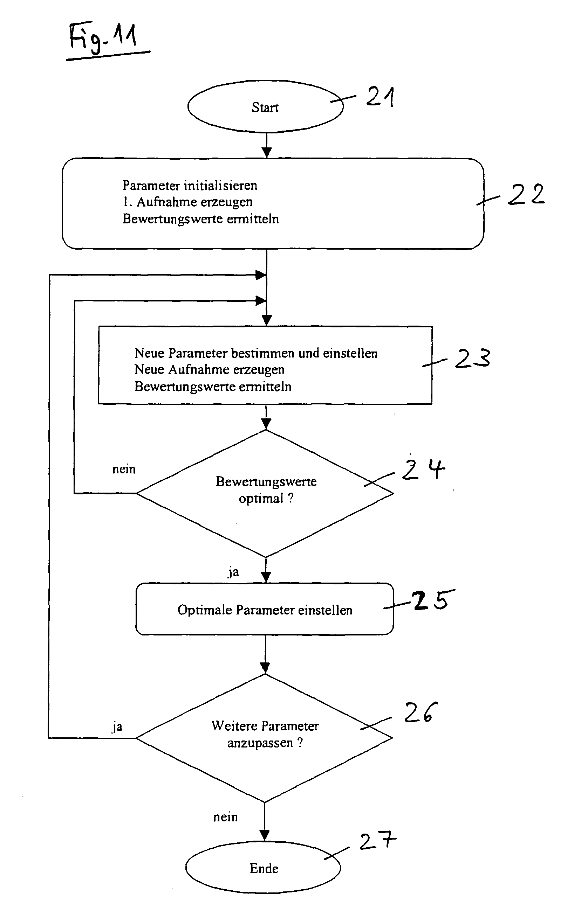

Fig. 11 zeigt ein Ablaufdiagramm zur Optimierung der Parameter für verschiedene Aufnahmen. Nach dem Start im Schritt 21 wird der Schritt 22 durchgeführt, bei dem die Parameter initialisiert werden, eine erste Aufnahme erzeugt wird und die zugehörigen Bewertungswerte ermittelt werden. Im Schritt 23 werden neue Parameter bestimmt und eingestellt, es wird eine neue Aufnahme erzeugt und es werden die zugehörigen Bewertungswerte ermittelt. In der Abfrage 24 wird geprüft, ob die Bewertungswerte optimal sind. Wenn dies nicht der Fall ist wird erneut der Schritt 23 durchgeführt. Wenn die Bewertungswerte optimal sind, werden im Schritt 25 die optimalen Parameter eingestellt. Dann wird im Schritt 26 geprüft, ob weitere Parameter anzupassen sind. Wenn dies der Fall ist wird erneut der Schritt 23 durchgeführt. Andernfalls erfolgt im Schritt 27 das Ende der Parameterbestimmung.

Als Kriterium für die Änderung der Kameraparameter (Beobachtungsparameter) und/oder der Strahlungsquellenparameter (Beleuchtungsparameter), also um die jeweilige Änderung eines Parameters hinsichtlich der resultierenden Bildhelligkeit bzw. der Bildaufhellung eines unterbelichteten Bereichs bzw. der Bildverdunkelung eines überstrahlten Bereichs zu beurteilen, können dienen:
- Die Lage des vom Sensor gelieferten Ausgangssignals innerhalb der Sensorkennlinie; bei einem CCD-Sensor sollte der gelieferte mittlere Grauwert im linearen Bereich der Sensorkennlinie liegen;
- bei Verwendung eines Phasenshiftverfahrens können die aus Phasenverschiebungen um 180° resultierenden Grauwertdifferenzen bzw. die durch die Phasenbildberechnung ermittelten Kontrastwerte maximiert werden;
- die überstrahlten Bildbereiche bzw. Pixel können minimiert werden.

Um die optimalen Kameraeinstellungen (Aufnahmeeinstellungen) und/oder Strahlungsquelleneinstellungen (Beleuchtungseinstellungen) zu finden, können die Einstellungen nacheinander auf die einzelnen Bildbereiche optimiert werden. In der interferometrischen Messtechnik genügen dazu meist zwei oder drei Einstellungen, nämlich eine dunkle Einstellung, eine helle Einstellung und gegebenenfalls eine mittlere Einstellung. Es sind allerdings beliebig viele Einstellungen möglich.

Die jeweiligen Einstellungen können manuell durch visuelle Beurteilung oder anhand der genannten Kriterien gefunden werden. In den meisten Fällen ist es allerdings sinnvoll, die Einstellungen durch einen Optimierungsalgorithmus automatisch an die jeweils untersuchten Objektoberflächen bzw. Oberflächenbereiche anzupassen.

Dazu können Zielvorgaben definiert werden, insbesondere anhand der genannten Kriterien. Durch iteratives Verändern der einzelnen Kameraparameter (Beobachtungsparameter) und/oder Strahlungsquellenparameter (Beleuchtungsparameter) können unterschiedliche Aufnahmen erzeugt und hinsichtlich der definierten Zielvorgaben beurteilt werden, bis ein Optimum erreicht ist. Es können also zu jeder Aufnahme Bewertungswerte ermittelt und mit der Zielvorgabe verglichen werden, bis eine weitgehende Übereinstimmung der Bewertungswerte mit den Zielvorgaben erreicht ist. Dabei können alle Parameter gleichzeitig verändert werden. In den meisten Fällen ist es allerdings vorteilhaft, die Parameter nacheinander zu optimieren.

Es ist ferner möglich, bei der Optimierung systematisch alle möglichen Werte der einzelnen Parameter durchzuprobieren. In den meisten Fällen ist es allerdings sinnvoller, anhand der für eine einzelne Aufnahme ermittelten Bewertungswerte und dem Vergleich mit den Zielvorgaben die jeweils nächsten Parameterwerte zu bestimmen, um auf diese Weise möglichst schnell optimale Parameterwerte zu ermitteln. Hierzu können an sich bekannte Optimierungsalgorithmen verwendet werden.

Durch die Erfindung wird ein Verfahren vorgeschlagen, mit dem mehrere Einzelmessungen kombiniert werden können, gegebenenfalls unter Berücksichtigung zusätzlicher Qualitätskriterien der einzelnen Bildpunkte der Einzelaufnahmen. Die Einzelaufnahmen können bei unterschiedlichen Kameraeinstellungen (Verstärkung, Blende, Verschlusszeit etc.) gemacht werden, und zwar jeweils optimiert für einzelne Bildbereiche im Gesichtsfeld der Kamera. Beispielsweise können hohe Verstärkungswerte für ein optimales Eingangssignal in dunklen Bildbereichen verwendet werden und niedrige Verstärkungswerte, eventuell kombiniert mit einer verkürzten Belichtungszeit, für stark reflektierende und damit helle Bildbereiche.

Die Einzelaufnahmen mit unterschiedlichen Parametern, insbesondere Kameraparametern, erfolgen vorzugsweise möglichst zeitnah, um annähernd die gleichen Verformungszustände zu beschreiben. Wenn die einzelnen Verformungszustände mit dem zeitlichen oder räumlichen Phasenshiftverfahren berechnet werden, kann das dabei errechnete Kontrastbild als Kriterium für die Güte der einzelnen Bildpunkte verwendet werden. Die Kombination der Verformungsinformationen mit unterschiedlichen Parametern bzw. Kameraparametern kann auf verschiedene Weise erfolgen, beispielsweise durch anhand eines Gütekriteriums gewichtete Mittelung der einzelnen Informationen je Bildpunkt oder durch Auswahl des Einzelbeitrags mit der höheren oder höchsten Güte.

Störende überstrahlte Bereiche treten insbesondere dann auf, wenn ein erheblicher Teil des auf das Objekt bzw. auf den Reifen auftreffenden Lichts in die Einfallsrichtung reflektiert wird und dort auf den bildgebenden Sensor bzw. CCD-Sensor trifft. Durch eine geeignete Anordnung der Lichtquelle bzw. der Lichtquellen in einem deutlichen seitlichen Abstand zum bildgebenden Sensor bzw. CCD-Sensor und mit einer gegenüber der Beobachtungsrichtung deutlich anderen Beleuchtungsrichtung kann erreicht werden, dass der Rückreflex in einem geringeren Ausmaß oder gar nicht in die Richtung des Sensors geht und somit der unerwünschte Effekt der überstrahlten Bildbereiche vermindert oder vermieden wird. Hierdurch kann die Anordnung für Verformungen in Richtung des Normalenvektors der Oberfläche des Objekts unempfindlicher werden und für inplane-Verformungen (also Verformungen in Richtung der Oberfläche des Objekts) empfindlicher werden.

## Patentansprüche

1. Verfahren zur Formmessung und/oder Verformungsmessung eines Objekts (3), bei dem
das Objekt (3) mit Licht (5), insbesondere strukturiertem Licht, insbesondere kohärentem oder teilkohärentem Licht, insbesondere Laserlicht, aus einer Strahlungsquelle bestrahlt wird,
das von dem Objekt (3) reflektierte Licht von einer Kamera mit einem bildgebenden Sensor (6) aufgenommen wird,
eine erste Aufnahme mit einer ersten Einstellung der Kamera und/oder der Strahlungsquelle gemacht wird, die an einen ersten Bildbereich (13) angepasst ist,
eine zweite Aufnahme mit einer zweiten Einstellung der Kamera und/oder der Strahlungsquelle gemacht wird, die an einen zweiten Bildbereich (12) angepasst ist,
und beide Aufnahmen kombiniert werden,
**dadurch gekennzeichnet,**
**daß** das Verfahren bei einem ersten Zustand des Objekts (3) durchgeführt wird und anschließend bei einem zweiten Zustand des Objekts (3) durchgeführt wird, der gegenüber dem ersten Zustand verformt ist,
und **daß** die Differenz der bei den beiden verschiedenen Zuständen des Objekts (3) gemachten Aufnahmen gebildet wird.

2. Verfahren nach Anspruch 1, **dadurch gekennzeichnet, daß** die Kombination der Aufnahmen durch eine Mittelung der Informationen je Bildpunkt erfolgt, wobei die Mittelung vorzugsweise anhand eines Gütekriteriums durchgeführt wird.

3. Verfahren nach Anspruch 1 oder 2, **dadurch gekennzeichnet, daß** die Kombination der Aufnahmen durch eine Auswahl der Information mit der höheren Güte erfolgt.

4. Verfahren nach einem der vorhergehenden Ansprüche, **dadurch gekennzeichnet, daß** mit der ersten Einstellung und der zweiten Einstellung jeweils mehrere Aufnahmen gemacht werden.

5. Verfahren nach Anspruch 4, **dadurch gekennzeichnet, daß** aus den mit der ersten und/oder zweiten und/oder weiteren Einstellungen gemachten Aufnahmen ein Mittelwert gebildet wird.

6. Verfahren nach einem der vorhergehenden Ansprüche, **dadurch gekennzeichnet, daß** die Bestrahlungsrichtung (10, 10') von der Aufnahmerichtung (11, 11') verschieden ist.

7. Verfahren nach einem der vorhergehenden Ansprüche, **dadurch gekennzeichnet, daß** eine oder mehrere Einstellungen der Kamera und/oder der Strahlungsquelle manuell ermittelt werden.

8. Verfahren nach einem der vorhergehenden Ansprüche, **dadurch gekennzeichnet, daß** eine oder mehrere Einstellungen der Kamera und/oder der Strahlungsquelle durch einen Optimierungsalgorithmus ermittelt werden.

9. Verfahren nach einem der vorhergehenden Ansprüche, **dadurch gekennzeichnet, daß** mehrere Kameraparameter nacheinander verändert werden, wobei mit den veränderten Kameraparametern unterschiedliche Aufnahmen erzeugt werden, wobei zu jeder Aufnahme Bewertungswerte ermittelt und mit einer Zielvorgabe verglichen werden, bis eine möglichst weitgehende Übereinstimmung der Bewertungswerte mit den Zielvorgaben erreicht ist.

10. Verfahren nach einem der vorhergehenden Ansprüche, **dadurch gekennzeichnet, daß** das Objekt aus unterschiedlichen Richtungen beleuchtet wird.

11. Verfahren nach einem der vorhergehenden Ansprüche, **dadurch gekennzeichnet, daß** das Objekt mit unterschiedlicher Lichtintensität beleuchtet wird.

12. Verfahren nach einem der vorhergehenden Ansprüche, **dadurch gekennzeichnet, daß** das Objekt mit einer unterschiedlichen Anzahl von Lichtquellen (1, 2, 3) beleuchtet wird.

## Claims

1. A method for the form measurement and/or deformation measurement of an object (3), in which
the object (3) is irradiated with light (5), in particular structured light, in particular coherent or partially coherent light, in particular laser light, from a radiation source,
the light reflected by the object (3) is picked up by a camera with an imaging sensor (6),
a first photograph is taken with a first setting of the camera and/or the radiation source, which is adapted to a first image zone (13),
a second photograph is taken with a second setting of the camera and/or the radiation source, which is adapted to a second image zone (12),
and both photographs are combined,
**characterized in**
**that** the method is carried out at a first state of the object (3) and subsequently is carried out at a second state of the object (3), which is deformed with respect to the first state,
and **that** the difference of the photographs taken at the two different states of the object (3) is formed.

2. The method according to claim 1, **characterized in that** the combination of the photographs is effected by averaging the information per pixel, wherein averaging preferably is carried out with the aid of a quality criterion.

3. The method according to claim 1 or 2, **characterized in that** the combination of the photographs is effected by a selection of the information with the higher quality.

4. The method according to any of the preceding claims, **characterized in that** several photographs each are taken with the first setting and the second setting.

5. The method according to claim 4, **characterized in that** a mean value is formed from the photographs taken with the first and/or second and/or further settings.

6. The method according to any of the preceding claims, **characterized in that** the irradiation direction (10, 10') is different from the photographing direction (11,11').

7. The method according to any of the preceding claims, **characterized in that** one or more settings of the camera and/or the radiation source are determined manually.

8. The method according to any of the preceding claims, **characterized in that** one or more settings of the camera and/or the radiation source are determined by an optimization algorithm.

9. The method according to any of the preceding claims, **characterized in that** several camera parameters are changed one after the other, wherein with the changed camera parameters different photographs are generated, wherein for each photograph evaluation values are determined and compared with a target, until the maximum possible correspondence of the evaluation values with the targets is achieved.

10. The method according to any of the preceding claims, **characterized in that** the object is illuminated from different directions.

11. The method according to any of the preceding claims, **characterized in that** the object is illuminated with different light intensity.

12. The method according to any of the preceding claims, **characterized in that** the object is illuminated with a different number of light sources (1, 2, 3).

## Revendications

1. Procédé pour mesurer la forme et/ou la déformation d'un objet (3), dans lequel
l'objet (3) est irradié avec de la lumière (5), en particulier de la lumière structurée, en particulier de la lumière cohérente ou partiellement cohérente, en particulier de la lumière laser, depuis une source de rayonnement,
la lumière réfléchie par l'objet (3) est reçue par une caméra avec un capteur (6), fournissant une image,
une première photographie est faite avec un premier réglage de la caméra et/ou de la source de rayonnement, qui est adaptée à une première zone d'image (13),
une deuxième photographie est faite avec un deuxième réglage de la caméra et/ou de la source de rayonnement, qui est adaptée à une deuxième zone d'image (12),
et les deux photographies sont combinées,
**caractérisé en ce que**
le procédé est effectué lors d'un premier état de l'objet (3) et ensuite lors d'un deuxième état de l'objet (3) qui est déformé par rapport au premier état, et **en ce que** la différence des photographies faites lors des deux différents états de l'objet (3) est formée.

2. Procédé selon la revendication 1, **caractérisé en ce que** la combinaison des photographie a lieu par un moyennage des informations pour chaque pixel, le moyennage étant effectué de préférence à l'aide d'un critère de qualité.

3. Procédé selon la revendication 1 ou 2, **caractérisé en ce que** la combinaison des photographies a lieu par une sélection de l'information ayant la plus haute qualité.

4. Procédé selon l'une des revendications précédentes, **caractérisé en ce que** plusieurs photographies sont faites avec le premier réglage et avec le deuxième réglage, respectivement.

5. Procédé selon la revendication 4, **caractérisé en ce qu'**une valeur moyenne est formée à partir des photographies faites avec le premier et/ou le deuxième et/ou d'autres réglages.

6. Procédé selon l'une des revendications précédentes, **caractérisé en ce que** la direction de rayonnement (10, 10') est différente de la direction de photographie (11,11').

7. Procédé selon l'une des revendications précédentes, **caractérisé en ce qu'**un ou plusieurs réglages de la caméra et/ou de la source de rayonnement sont déterminés manuellement.

8. Procédé selon l'une des revendications précédentes, **caractérisé en ce qu'**un ou plusieurs réglages de la caméra et/ou de la source de rayonnement sont déterminés par un algorithme d'optimisation.

9. Procédé selon l'une des revendications précédentes, **caractérisé en ce que** plusieurs paramètres de caméra sont modifiés les uns après les autres, différentes photographies pouvant être faites avec les paramètres de caméra modifiés, des valeurs d'évaluation étant déterminées pour chaque photographie et comparées avec une cible jusqu'à ce qu'une large correspondance des valeurs d'évaluation avec les cibles soit atteinte.

10. Procédé selon l'une des revendications précédentes, **caractérisé en ce que** l'objet est éclairé depuis différentes directions.

11. Procédé selon l'une des revendications précédentes, **caractérisé en ce que** l'objet est éclairé avec différentes intensités lumineuses.

12. Procédé selon l'une des revendications précédentes, **caractérisé en ce que** l'objet est éclairé avec un nombre différent de sources de lumière (1, 2, 3).
